# EUROPEAN PATENT APPLICATION

(11) **EP 4 825 546 A1**
(43) Date of publication of application: **21.10.2026**
(21) Application number: 24903445.5
(22) Date of filing: 19.11.2024
(51) Int. Cl.: B25J 17/00, H02K 7/116

(54) **GEAR MOTOR SERIES AND ROBOT SERIES**

(30) Priority: 12.12.2023 JP 2023209663
(71) Applicant: Sumitomo Heavy Industries, Ltd., Tokyo 141-6025 (JP)
(72) Inventor: MORITANI Koji, Yokosuka-shi Kanagawa 237-8555 (JP)
(74) Representative: Louis Pöhlau Lohrentz
(86) International application number: PCT/JP2024/040987
(87) International publication number: WO 2025/126786

(57) **Abstract**

A series 1000 of gear motors is a series of gear motors including a first series S1 and a second series S2. The first series S1 includes at least a first gear motor 100 including a first speed reducer 10-A and a first motor 11-A, and a second gear motor 120 including a second speed reducer 10-B having an allowable torque larger than an allowable torque of the first speed reducer 10-A and a second motor 11-B having a rated capacity larger than a rated capacity of the first motor 11-A. The second series S2 includes at least a third gear motor 130 including the second speed reducer 10-B and the first motor 11-A.

## Description

### Technical Field

The present disclosure relates to a series of gear motors and a series of robots.

### Background Art

In the related art, there is known a gear motor that is configured by connecting a speed reducer and a motor. The present applicant discloses, in PTL 1, a gear motor that drives a joint of a robot such as a cooperative robot.

### Citation List

### Patent Literature

[PTL 1] Japanese Unexamined Patent Application, No. 2021-097430

### Summary of Invention

### Technical Problem

Specifications of respective joint portions are different for each joint of a robot of each customer. However, in a case where the gear motors are customized and prepared for each joint of the robot of each customer, the number of types of the gear motor increases, which is disadvantageous for cost reduction of the gear motor.

The present disclosure has been made in consideration of problems as above, and an object of the present disclosure is to provide a series of gear motors capable of suppressing the number of types of gear motors.

### Solution to Problem

In order to solve the above problem, a series of gear motors according to an aspect of the present disclosure is a series of gear motors including a first series and a second series, in which the first series includes at least a first gear motor including a first speed reducer and a first motor, and a second gear motor including a second speed reducer having an allowable torque larger than an allowable torque of the first speed reducer and a second motor having a rated capacity larger than a rated capacity of the first motor. The second series includes at least a third gear motor including the second speed reducer and the first motor.

Another aspect of the present disclosure is also a series of gear motors. The series is a series of gear motors including a first series and a third series, in which the first series includes at least a first gear motor including a first speed reducer and a first motor, and a second gear motor including a second speed reducer having an allowable torque larger than an allowable torque of the first speed reducer and a second motor having a rated capacity larger than a rated capacity of the first motor. The third series includes at least a fourth gear motor including the second speed reducer and a third motor. The third motor has the same shape and outer diameter of a connection portion with the second speed reducer as the second motor, and has an axial length shorter than an axial length of the second motor.

Still another aspect of the present disclosure is a series of robots. The series is a series of robots including a first robot and a second robot having a payload larger than a payload of the first robot, in which the first robot includes a first joint portion and a second joint portion having an operation ratio smaller than an operation ratio of the first joint portion. A second gear motor including a second speed reducer and a second motor is incorporated in the first joint portion, and the second robot includes a third joint portion and a fourth joint portion having an operation ratio smaller than an operation ratio of the third joint portion. A third gear motor including the second speed reducer and a first motor having a rated capacity smaller than a rated capacity of the second motor is incorporated in the fourth joint portion.

Any combination of the above-described components, and those in which components or expressions according to the present disclosure are substituted for each other in methods or systems are effectively applicable as an aspect of the present disclosure.

### Advantageous Effects of Invention

According to the present disclosure, it is possible to provide a series of gear motors capable of suppressing the number of types of gear motors.

### Brief Description of Drawings

FIG. 1 is a cross-sectional view in a side view showing a first gear motor constituting a series of gear motors according to a first embodiment.
FIG. 2 is a diagram showing an example of a series system of the gear motor according to the first embodiment.
FIG. 3 is a diagram schematically showing a first robot constituting a series of robots according to a second embodiment.
FIG. 4 is a diagram showing an example of a configuration of the first robot in FIG. 3.
FIG. 5 is a diagram schematically showing a second robot constituting a series of robots according to a second embodiment.
FIG. 6 is a diagram showing an example of a configuration of the second robot in FIG. 5.

### Description of Embodiments

First, circumstances that led to the present disclosure will be described. For a gear motor that can be used as an actuator of an articulated robot, it is conceivable to have a model in a lineup that includes a motor having a rated capacity satisfying continuous characteristics in which a speed reducer can continuously maintain an output. In this case, in order to suppress the number of models in the lineup, a configuration can be adopted in which a high-operation ratio gear motor mounted on a base end side of a robot arm is also mounted on a distal end side.

The operation of each joint of a robot arm of an articulated robot will be considered. According to the research of the inventor, it has been found that a base end-side gear motor has a high actual operation ratio and continuous characteristics and instantaneous characteristics are important, whereas a distal end-side gear motor has a low actual operation ratio and continuous characteristics and the like are not important. The feature that the actual operation ratio of the distal end-side gear motor is low is more strongly observed in a cooperative robot that cooperates with a human. Accordingly, it can be said that a configuration in which a motor satisfying the continuous characteristics of the speed reducer is mounted on the distal end-side gear motor results in an overspecified motor.

When a motor satisfying the continuous characteristics of the speed reducer is mounted on the distal end-side gear motor having a low actual operation ratio, a mass of the motor increases accordingly. When a model having improved load performance is used for the base end-side gear motor in response to an increase in a mass on the distal end side, a mass of the base end-side gear motor also increases, and a mass of the entire robot increases. Therefore, when gear motors are customized and prepared for each joint of the robot of each customer, the number of types of gear motors increases, which is disadvantageous for cost reduction of the gear motor.

Therefore, in order to achieve weight saving of the robot and reduction in the number of types of gear motors, the inventor has devised a technique capable of providing a series of gear motors in which a motor suitable for the actual operation ratio is mounted on the gear motor and components are shared. In addition, this technical idea can also be applied to a robot equipped with a plurality of gear motors. Hereinafter, the present disclosure will be described through embodiments.

Hereinafter, the present disclosure will be described with reference to each drawing based on a preferred embodiment. In the embodiments and modification examples, the same or equivalent components and members will be represented by the same reference numerals and duplicate descriptions will be appropriately omitted. In addition, when the same or equivalent components and members are distinguished from each other, a symbol in which a hyphen, an alphabet, and a number are combined, such as "-A", "-B", "-C", "-1A", "-2B", or "-3C", is added to the end of the reference numeral, and when the same or equivalent components and members are not distinguished, the symbol is not added. In addition, dimensions of the members in each drawing are shown enlarged or reduced as appropriate for easy understanding. Moreover, in each drawing, some of the members not important for the description of the embodiment are not shown.

In addition, although terms including ordinal numbers such as "first" and "second" will be used to describe various components, the terms will be used only for the purpose of distinguishing one component from the other component and no component is limited by the terms.

An operation ratio of the speed reducer of the gear motor mounted on the robot is defined as follows. The operation ratio of the speed reducer of the gear motor means a ratio of an operation time TJ of the gear motor to an operation time TR of the robot on which the gear motor is mounted, and is represented by Expression 1. 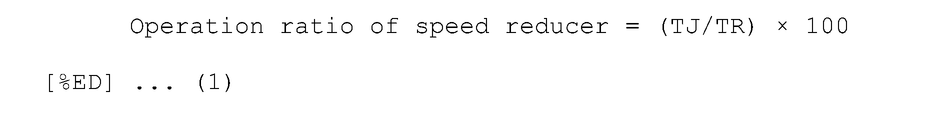 Operation ratio of speed reducer = (TJ/TR) × 100 [%ED] (1)

The operation time TR of the robot itself can be defined as a time during which a power supply of the robot is turned on, or in a case of the robot, a time during which a power supply of a motor that drives each joint of the robot is turned on. Therefore, the operation time TR of the robot itself includes a waiting time when the robot works on a certain workpiece and waits for a next workpiece to be set. In addition, the operation time TJ of the speed reducer of the gear motor can be defined as a time during which the speed reducer for which the operation ratio is calculated is driven, or a time during which a motor that drives the speed reducer is rotation-controlled. The operation ratio of the speed reducer of the gear motor may be referred to as an "operation ratio of the gear motor".

In the present specification, a rated capacity of the motor is a value (W) of a work rate set as a rated value by a manufacturer of the motor, and may be, for example, a value of the work rate within a limit in which the motor can be continuously used. The rated capacity of the motor may be referred to as a rated output. In addition, an allowable torque of the speed reducer is a torque value (N·m) that can be applied to an output shaft of the speed reducer set by a manufacturer of the gear motor or the speed reducer, and is, for example, a torque value that can be continuously applied to the output shaft of the speed reducer. The allowable torque of the speed reducer is smaller than the maximum allowable torque of the speed reducer. In addition, the allowable torque of the speed reducer may be expressed by a frame number, and as the frame number increases, the allowable torque (allowable rated torque and allowable peak torque) increases, and the size (outer diameter) and weight of the speed reducer also increase.

In the present specification, a payload of the robot is a payload set as a rated value by a manufacturer of the robot, and may be a mass that is supported on the distal end side of the robot arm and can be continuously moved.

### [First Embodiment]

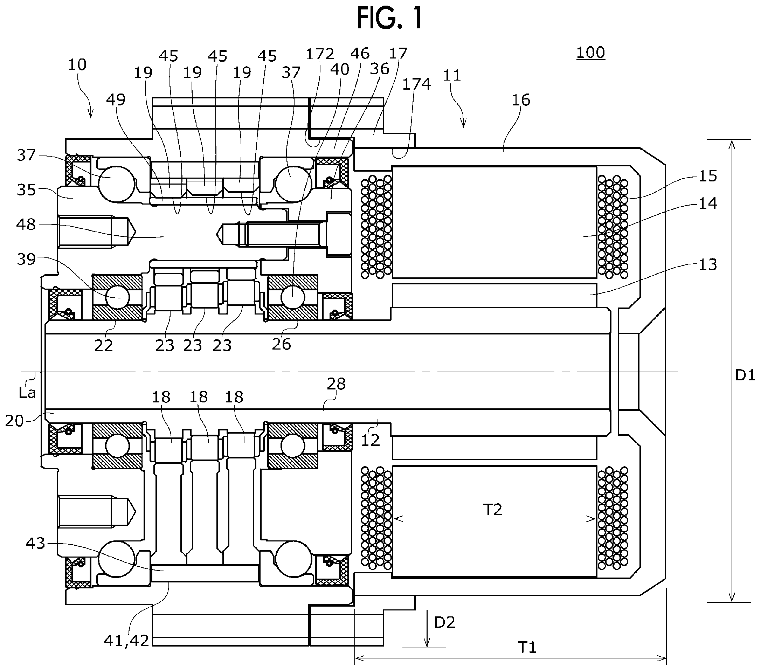

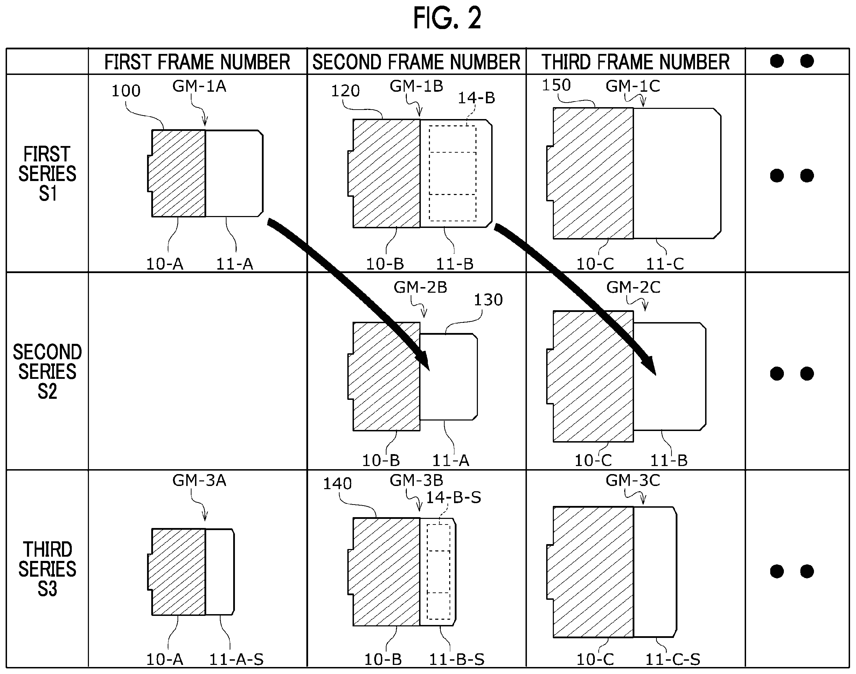

A series 1000 of gear motors (hereinafter, may be referred to as a "series 1000") and a series 2000 of gear motors (hereinafter, may be referred to as a "series 2000") according to a first embodiment will be described with reference to the drawings. FIG. 1 is a cross-sectional view in a side view showing an example of a first gear motor 100 constituting the series 1000. FIG. 2 is a diagram showing an example of a first series S1, a second series S2, and a third series S3. The series 1000 is different from the series 2000 in that the series 1000 includes the first series S1 and the second series S2, whereas the series 2000 includes the first series S1 and the third series S3.

Next, the first gear motor 100 will be described. A second gear motor 120, a third gear motor 130, a fourth gear motor 140, and a fifth gear motor 150, which will be described later, have a configuration common to the first gear motor 100. Therefore, the description of the first gear motor 100 is also applied to the second gear motor 120, the third gear motor 130, the fourth gear motor 140, and the fifth gear motor 150. As shown in FIG. 1, the first gear motor 100 includes a motor 11 and a speed reducer 10 that decelerates and outputs a rotation of a motor shaft 12 of the motor 11.

Hereinafter, a direction along a central axis line La of an input shaft 20 of the speed reducer 10 will be referred to as an "axial direction", a side (right side in the drawing) on which the motor shaft 12 of the input shaft 20 is connected in the axial direction will be referred to as a "motor side", and the other side (left side in the drawing) will be referred to as a "motor-reverse side". That is, the input shaft 20 extends from the motor side to the motor-reverse side in the axial direction. In addition, a circumferential direction and a radial direction of a circle centered on the central axis line La will be referred to as a "circumferential direction" and a "radial direction", respectively.

In the example of FIG. 1, the input shaft 20 of the speed reducer 10 is a hollow shaft that is integrally formed with the motor shaft 12 of the motor 11. The input shaft 20 and the motor shaft 12 may be separately formed and connected to each other by a connection member (not shown).

The motor 11 of the present embodiment is a servo motor, and includes the motor shaft 12, a cylindrical magnet 13 that is fixed to an outer periphery of the motor shaft 12, a cylindrical stator core 14 that surrounds the magnet 13 via a magnetic air gap, an armature winding 15 that is provided in a slot (not shown) of the stator core 14, and a motor case 16 that constitutes an outer shell of the motor 11. The magnet 13 may be a single cylindrical magnet or may be a plurality of plate-shaped magnets disposed in a cylindrical shape. The motor case 16 has a tubular shape surrounding the motor 11, and the stator core 14 is fixed to an inner peripheral surface thereof. In addition, the motor 11 includes a control circuit (not shown) that controls the rotation of the motor shaft 12, and an encoder (not shown) that detects a rotational position of the motor shaft 12 to provide the detected rotational position to the control circuit. When a drive current from the control circuit flows through the armature winding 15, the motor 11 rotates the motor shaft 12 by a torque generated by an interaction between a rotating magnetic field generated on an inner peripheral surface of the stator core 14 and a field magnetic pole provided on an outer peripheral surface of the magnet 13.

In addition, the motor 11 includes a connection portion 17 that is provided in the motor case 16. The connection portion 17 is a connection portion to the speed reducer 10, and has an inner peripheral surface 172 that is spigot-fitted to an outer side of a casing 46 of the speed reducer 10. The connection portion 17 of the present embodiment is formed separately from the motor case 16, and includes a motor fitting portion 174 that is fitted and fixed to the motor case 16. Therefore, by preparing the connection portion 17 with a smaller inner diameter of the motor fitting portion 174, the motor 11 having a smaller diameter can be connected to the same speed reducer 10. In FIG. 1, a reference numeral T1 indicates an axial length of the motor 11, a reference numeral T2 indicates an axial length of the stator core 14, a reference numeral D1 indicates an outer diameter of the motor 11, and a reference numeral D2 indicates an outer diameter of the connection portion 17.

The speed reducer 10 mainly includes an external gear 19, an internal gear 41, an input shaft 20, carriers 35 and 36, an inner pin 48, an eccentric bearing 18, a main bearing 37, a first bearing 39 and a second bearing 40 that support the input shaft 20, and a casing 46.

The speed reducer 10 decelerates the rotation input from the motor 11 and outputs the decelerated rotation from the carrier 35. The speed reducer 10 is not limited as long as it is capable of decelerating an input rotation and outputting the decelerated rotation. The speed reducer 10 of the present embodiment is a center crank type in which the central axis line La of the input shaft 20 is provided on the same axis line as a central axis line of the internal gear.

The input shaft 20 includes a plurality of eccentric portions 23 for oscillating the external gear 19. An axis core of the eccentric portion 23 is eccentric with respect to the rotation center line La of the input shaft 20. In the present embodiment, three eccentric portions 23 are provided, and eccentric phases of the adjacent eccentric portions 23 deviate from each other by 120°.

The input shaft 20 is supported by the first carrier 35 and the second carrier 36 via the first bearing 39 and the second bearing 40. The casing 46 has a tubular shape surrounding the speed reducer 10, and the internal gear 41 is provided on an inner peripheral surface thereof. The external gear 19 is oscillatably incorporated into an outer periphery of the eccentric portion 23 via the eccentric bearing 18 that is a roller bearing. The external gear 19 is in internal meshing with the internal gear 41 while each of the external gears 19 oscillates. Wave-shaped teeth are formed on an outer periphery of the external gear 19, and the external gear 19 is enabled to oscillate in a plane having a center axis as a normal line by movement of the teeth while being in contact with the internal gear 41.

The internal gear 41 of the present embodiment includes an internal gear main body 42 that is integrally provided on an inner peripheral side of the casing 46, and a plurality of outer pins 43 that are disposed in pin grooves formed at predetermined intervals in the circumferential direction on an inner peripheral surface of the internal gear main body 42. The outer pin 43 constitutes an internal tooth of the internal gear 41. The number of the outer pins 43 of the internal gear 41 is the number of internal teeth, and is larger than the number of external teeth of the external gear 19 by 1.

A plurality of inner pin holes 45 are formed in the external gear 19 at positions offset from an axial center thereof. The inner pin 48 penetrates the inner pin hole 45. A cylindrical sleeve 49 is disposed in an outer periphery of the inner pin 48. The inner pin 48 contributes to transmission of power between the carriers 35 and 36 and the external gear 19.

The carriers 35 and 36 include the first carrier 35 that is disposed in a side portion of the external gear 19 on the motor-reverse side, and the second carrier 36 that is disposed in a side portion of the external gear 19 on the motor side. The first carrier 35 is fixed to the second carrier 36 by the inner pin 48 extending in the axial direction and being fixed to the second carrier 36. The first carrier 35 is an output member that outputs rotational power to a driven member (not shown). The main bearing 37 rotatably supports the carriers 35 and 36 with respect to the casing 46.

An operation of the first gear motor 100 will be described. In a case where rotational power is transmitted from the motor 11 to the input shaft 20, the eccentric portion 23 eccentrically rotates to oscillate the external gear 19. In a case where the external gear 19 oscillates, a meshing position between the external gear 19 and the internal gear 41 is sequentially shifted, and the external gear 19 rotates by an amount corresponding to a difference between the number of teeth of the external gear 19 and the number of teeth of the internal gear 41 each time the input shaft 20 rotates once. As a result, decelerated rotation is output from the first carrier 35.

Next, the series 1000 and the series 2000 will be described with reference to FIGS. 1 and 2. In FIG. 2, frame numbers are classified according to allowable torque of a speed reducer constituting the gear motor, and the allowable torque of the speed reducer increases in the order of a first frame number, a second frame number, a third frame number, and so on. In the same series, a rated capacity of each motor increases in the order of the first frame number, the second frame number, the third frame number, and so on. As an example, the allowable torque of each speed reducer of the gear motor having the same frame number is common to a first series S1 to a third series S3, and the rated capacity of each motor of the gear motor having the same frame number is different.

In FIG. 2, the gear motor of the first series S1 includes a motor having a rated capacity that can substantially satisfy a rated operation ratio of the gear motor. The gear motors of the second series S2 and the third series S3 include a motor having a rated capacity lower than the rated operation ratio of the gear motor, and include a motor having a rated capacity that can substantially satisfy an assumed operation ratio lower than the rated operation ratio of the gear motor.

The first series S1 is a series of gear motors for applications with a high actual operation ratio, and includes a gear motor GM-1A having the first frame number, a gear motor GM-1B having the second frame number, and a gear motor GM-1C having the third frame number. The gear motor GM-1A includes a speed reducer 10-A and a motor 11-A, the gear motor GM-1B includes a speed reducer 10-B and a motor 11-B, and the gear motor GM-1C includes a speed reducer 10-C and a motor 11-C.

The second series S2 is a series of gear motors for applications with a lower actual operation ratio than the first series S1, and includes a gear motor GM-2B having the second frame number and a gear motor GM-2C having the third frame number. The gear motor GM-2B includes the speed reducer 10-B and the motor 11-A, and the gear motor GM-2C includes the speed reducer 10-C and the motor 11-B.

The third series S3 is a series of gear motors for applications with a lower actual operation ratio than the first series S1, and includes a gear motor GM-3A having the first frame number, a gear motor GM-3B having the second frame number, and a gear motor GM-3C having the third frame number. The gear motor GM-3A includes the speed reducer 10-A and a motor 11-A-S, the gear motor GM-3B includes the speed reducer 10-B and a motor 11-B-S, and the gear motor GM-3C includes the speed reducer 10-C and a motor 11-C-S.

The motor 11-A-S has the same shape and outer diameter of a connection portion with the speed reducer 10-A as the motor 11-A, and has an axial length shorter than an axial length of the motor 11-A. The motor 11-B-S has the same shape and outer diameter of a connection portion with the speed reducer 10-B as the motor 11-B, and has an axial length shorter than an axial length of the motor 11-B. The motor 11-C-S has the same shape and outer diameter of a connection portion with the speed reducer 10-C as the motor 11-C, and has an axial length shorter than an axial length of the motor 11-C. The axial length of the motor and the connection portion will be described below.

The gear motor GM-1A exemplifies the first gear motor 100, the gear motor GM-1B exemplifies the second gear motor 120, the gear motor GM-2B exemplifies the third gear motor 130, the gear motor GM-3B exemplifies the fourth gear motor 140, and the gear motor GM-1C exemplifies the fifth gear motor 150.

In a case where only the first series S1 is lined up, the first series S1 is suitable for applications with a high actual operation ratio, but the performance of the motor is excessive in applications with a low actual operation ratio, and the mass is unnecessarily increased. In addition, in a case where the gear motor is customized for each application, the number of types of gear motors increases, and the design cost increases.

In order to alleviate the disadvantage in a case where only the first series S1 is lined up, the series 1000 of the present embodiment is a series of gear motors including the first series S1 and the second series S2. The first series S1 includes at least the first gear motor 100 including the first speed reducer 10-A and the first motor 11-A, and the second gear motor 120 including the second speed reducer 10-B having an allowable torque larger than an allowable torque of the first speed reducer 10-A and a second motor 11-B having a rated capacity larger than a rated capacity of the first motor 11-A. The second series S2 includes at least a third gear motor 130 including the second speed reducer 10-B and the first motor 11-A. As shown by an arrow in FIG. 2, the gear motor of the second series S2 has a configuration in which the speed reducer of the first series S1 having the same frame number and the motor having the previous frame number are combined. This feature is also provided in the gear motors having other frame numbers of the first series S1 and the second series S2.

According to the series 1000, since the series 1000 includes the second series S2 suitable for applications with a low actual operation ratio, the gear motor of the second series S2 can be used for applications with a low actual operation ratio. In this case, the mass can be suppressed from increasing by making the motor lightweight. Since the components common to the first series S1 are used in the second series S2, an increase in the design cost of the gear motor can be suppressed.

In order to alleviate the disadvantage in a case where only the first series S1 is lined up, the series 2000 of the present embodiment is a series of gear motors including the first series S1 and the third series S3. The first series S1 includes at least the first gear motor 100 including the first speed reducer 10-A and the first motor 11-A, and the second gear motor 120 including the second speed reducer 10-B having an allowable torque larger than an allowable torque of the first speed reducer 10-A and the second motor 11-B having a rated capacity larger than a rated capacity of the first motor 11-A. The third series S3 includes at least the fourth gear motor 140 including the second speed reducer 10-B and a third motor 11-B-S. The third motor 11-B-S has the same shape and outer diameter D2 of the connection portion 17 with the second speed reducer 10-B as the second motor 11-B, and has an axial length T1 shorter than an axial length T1 of the second motor 11-B. As an example, the axial length T1 of the third motor 11-B-S may be 40% to 70% of the axial length T1 of the second motor 11-B, and is 50% in the present embodiment. This feature is also provided in the gear motors having other frame numbers of the first series S1 and the third series S3.

According to the series 2000, since the series 2000 includes the third series S3 suitable for applications with a low actual operation ratio, the gear motor of the third series S3 can be used for applications with a low actual operation ratio. In this case, the mass can be suppressed from increasing by making the motor lightweight. Since the components common to the first series S1 are used in the third series S3, an increase in the design cost of the gear motor can be suppressed.

In the third motor 11-B-S of the series 2000 of the present embodiment, the axial length T2 of the stator core 14 is configured to be smaller than the axial length T2 of the stator core 14 of the second motor 11-B. In this case, since the axial length of the stator core is reduced, a decrease in the space of the armature winding 15 or a decrease in the number of turns of the armature winding 15 can be alleviated. As an example, the axial length T2 of the stator core 14 of the third motor 11-B-S may be 40% to 90% of the axial length T2 of the stator core 14 of the second motor 11-B, and is 50% in the present embodiment. This feature is also provided in the gear motors having other frame numbers of the third series S3.

Hereinabove, the first embodiment has been described.

### [Second Embodiment]

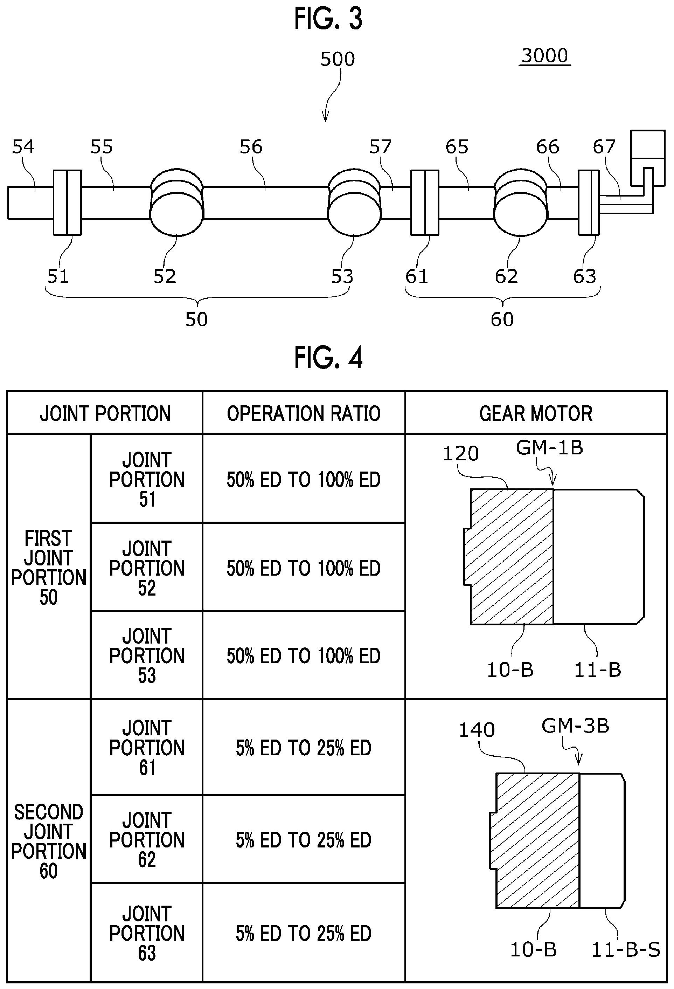

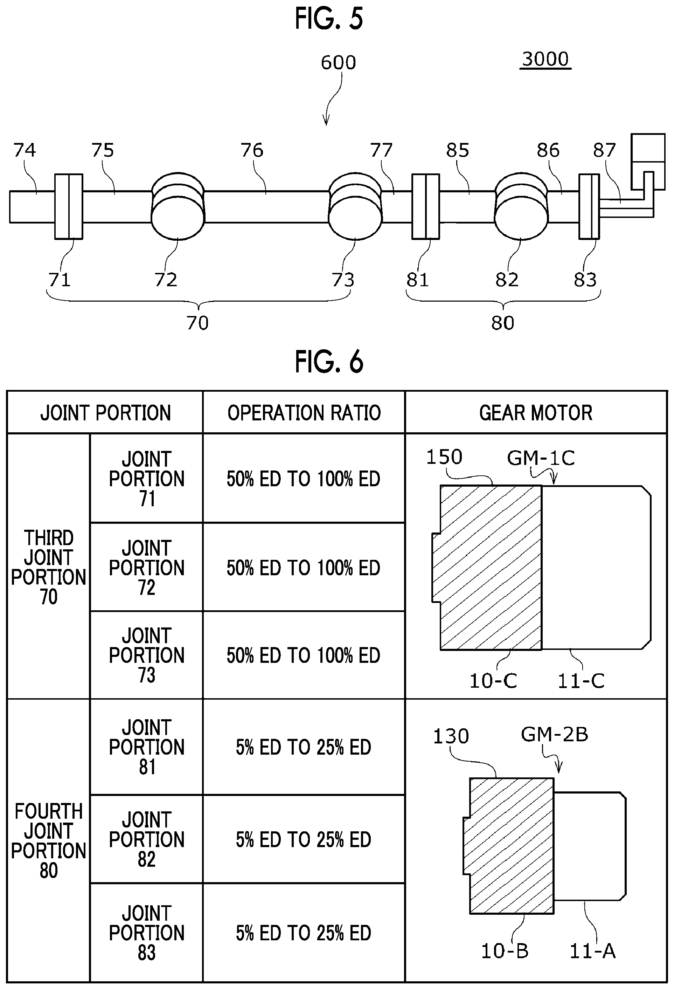

A series 3000 of robots according to a second embodiment of the present disclosure will be described with reference to FIGS. 3 and 4. The series 3000 of robots is a series of robots including a first robot 500 and a second robot 600 having a payload larger than a payload of the first robot 500. FIG. 3 is a diagram schematically showing the first robot 500 constituting the series 3000 of robots. FIG. 4 is a diagram showing an example of a configuration of the first robot 500. FIG. 5 is a diagram schematically showing the second robot 600 constituting the series 3000 of robots. FIG. 6 is a diagram showing an example of a configuration of the second robot 600.

The first robot 500 is an articulated robot including a first joint portion 50 and a second joint portion 60 having an operation ratio smaller than an operation ratio of the first joint portion 50. The first joint portion 50 includes a joint portion 51, a joint portion 52, and a joint portion 53 that are arranged in order from a base end side toward a distal end side. An arm portion 54 is provided on a base end side of the joint portion 51, an arm portion 55 is provided between the joint portion 51 and the joint portion 52, an arm portion 56 is provided between the joint portion 52 and the joint portion 53, and an arm portion 57 is provided on a distal end side of the joint portion 53.

The second joint portion 60 includes a joint portion 61, a joint portion 62, and a joint portion 63 that are arranged in order from a base end side toward a distal end side. The joint portion 61 is provided on a distal end side of the arm portion 57, an arm portion 65 is provided between the joint portion 61 and the joint portion 62, an arm portion 66 is provided between the joint portion 62 and the joint portion 63, and an arm portion 67 is provided on a distal end side of the joint portion 63.

The second gear motor 120 including the second speed reducer 10-B and the second motor 11-B is incorporated in the first joint portion 50. For example, gear motors of the second series S2 or the third series S3 corresponding to a low operation ratio may be incorporated in the second joint portion 60. The fourth gear motor 140 (GM-3B) is incorporated in the second joint portion 60 of this example.

The second robot 600 is an articulated robot including a third joint portion 70 and a fourth joint portion 80 having an operation ratio smaller than an operation ratio of the third joint portion 70. The third joint portion 70 includes a joint portion 71, a joint portion 72, and a joint portion 73 that are arranged in order from a base end side toward a distal end side. An arm portion 74 is provided on a base end side of the joint portion 71, an arm portion 77 is provided between the joint portion 71 and the joint portion 72, an arm portion 76 is provided between the joint portion 72 and the joint portion 73, and an arm portion 77 is provided on a distal end side of the joint portion 73.

The fourth joint portion 80 includes a joint portion 81, a joint portion 82, and a joint portion 83 that are arranged in order from a base end side toward a distal end side. The joint portion 81 is provided on a distal end side of the arm portion 77, an arm portion 85 is provided between the joint portion 81 and the joint portion 82, an arm portion 86 is provided between the joint portion 82 and the joint portion 83, and an arm portion 87 is provided on a distal end side of the joint portion 83.

The third gear motor 130 including the second speed reducer 10-B and the first motor 11-A having a rated capacity smaller than a rated capacity of the second motor 11-B is incorporated in the fourth joint portion 80. For example, gear motors of the first series S1 corresponding to a high operation ratio may be incorporated in the third joint portion 70. The fifth gear motor 150 including the third speed reducer 10-C having an allowable torque larger than an allowable torque of the second speed reducer 10-B and the motor 11-C having a rated capacity larger than a rated capacity of the second motor 11-B is incorporated in the third joint portion 70 of this example.

As an example, the operation ratio of the first joint portion 50 is three times or more the operation ratio of the second joint portion 60 and/or the operation ratio of the third joint portion 70 is three times or more the operation ratio of the fourth joint portion 80. In this case, the rated capacity of the motor of the second joint portion 60 or the fourth joint portion 80 can be reduced as compared with a case where the ratio of the operation ratios between the joint portions is less than three times. As a result, it is advantageous in reducing the entire mass of the robots 500 and 600. Further, the operation ratio of one joint portion may be four times or more that of another. In this case, compared with a case where the operation ratio is one, it is possible to reduce the rated capacity of the motors of the second joint portion 60 and the fourth joint portion 80 to one half, which is more preferable from the viewpoint of mass reduction.

In the present embodiment, the operation ratios of the first joint portion 50 and the third joint portion 70 are set in a range of 50%ED to 100%ED, and the operation ratios of the second joint portion 60 and the fourth joint portion 80 are set in a range of 5%ED to 25%ED.

According to the series 3000 of the robot of the second embodiment, by mounting the gear motor in which the actual operation ratio is considered on each of the gear motors of the joint portions on the base end side and the distal end side, the performance of the robot, such as the payload and the reach length, can be improved. In addition, since the second robot 600 uses the common component with the first robot 500, the design cost of each robot can be reduced. In addition, in a case where a motor having a smaller rated capacity and a different frame number from that of the gear motor of the joint portion on the base end side is combined with the gear motor of the joint portion on the distal end side, the outer diameter size of the gear motor of the joint portion on the distal end side can be reduced. In addition, in a case where a motor having a smaller axial length of the motor of the gear motor of the joint portion on the base end side is combined with the gear motor of the joint portion on the distal end side, the axial length of the gear motor can be reduced. As a result, since weight saving and space saving of the joint portion on the distal end side can be achieved, weight saving of the entire robot arm is also possible, and the performance of the robot can be improved.

Hereinabove, the second embodiment has been described. The second embodiment has the same actions and effects as those of the first embodiment.

The contents of the present disclosure have been described above based on the embodiment. It is clear for those skilled in the art that these embodiments are merely examples, various modifications and changes can be made, and such modification examples and changes are also within the present disclosure. Therefore, the descriptions and the drawings in the present specification should be treated as illustrative, not limiting.

### (Modification Example)

Hereinafter, modification examples will be described. In the drawings and description of the modification examples, the same or equivalent components and members as the embodiment will be represented by the same reference numerals. Description overlapping with that in the embodiment will be omitted as appropriate, and description will be made focusing on configurations different from those in the embodiment.

In the above description, an example in which the connection portion 17 is formed separately from the motor case 16 has been shown. However, the present disclosure is not limited thereto. The connection portion may be formed as a one-piece member with the motor case.

In the above description, an example in which the motor 11 is a servo motor has been shown. However, the present disclosure is not limited thereto. The motor is not limited as long as it can output rotation to the speed reducer, and may be based on various well-known principles.

In the above description, an example in which the speed reducer 10 is a so-called center crank type eccentric oscillating speed reducer has been shown. However, the present disclosure is not limited thereto. The speed reducer is not limited as long as it can decelerate and output rotation from the motor, and may be based on various well-known principles. For example, the speed reducer 10 may be a sorting type eccentric oscillating speed reducer, a bending meshing type speed reducer, a simple planetary speed reducer, a perpendicular-axis speed reducer, a parallel-axis speed reducer, or the like.

In the above description, an example in which each of the first joint portion 50 to the fourth joint portion 80 includes three joint portions has been shown. However, the present disclosure is not limited thereto. The number of joint portions in the first joint portion to the fourth joint portion may be one or more.

In the above description, the technical idea of the series of gear motors and the series of robots has been described. However, the technical idea of the manufacturing method or the construction method of the series of gear motors (product group) or the manufacturing method or the construction method of the series of robots (product group) can also be understood.

Each of these modification examples exhibits the same actions and effects as those of the embodiment.

Any combination of the above-described embodiments and modification examples is also useful as an embodiment of the present disclosure. The new embodiment resulting from the combination has the effects of both the combined embodiment and modification examples.

### Industrial Applicability

The present disclosure relates to a series of gear motors and a series of robots.

### Reference Signs List

- S1: first series
- S2: second series
- S3: third series
- 10: speed reducer
- 11: motor
- 14: stator core
- 50: first joint portion
- 60: second joint portion
- 70: third joint portion
- 80: fourth joint portion
- 100: first gear motor
- 120: second gear motor
- 130: third gear motor
- 140: fourth gear motor
- 150: fifth gear motor
- 500: first robot
- 600: second robot
- 1000, 2000, 3000: series

## Claims

1. A series of gear motors comprising:
a first series; and
a second series,
wherein the first series includes at least
a first gear motor including a first speed reducer and a first motor, and
a second gear motor including a second speed reducer having an allowable torque larger than an allowable torque of the first speed reducer and a second motor having a rated capacity larger than a rated capacity of the first motor, and
the second series includes at least a third gear motor including the second speed reducer and the first motor.

2. A series of gear motors comprising:
a first series; and
a third series,
wherein the first series includes at least
a first gear motor including a first speed reducer and a first motor, and
a second gear motor including a second speed reducer having an allowable torque larger than an allowable torque of the first speed reducer and a second motor having a rated capacity larger than a rated capacity of the first motor,
the third series includes at least a fourth gear motor including the second speed reducer and a third motor, and
the third motor has the same shape and outer diameter of a connection portion with the second speed reducer as the second motor, and has an axial length shorter than an axial length of the second motor.

3. The series of gear motors according to claim 2, wherein an axial length of a stator core of the third motor is shorter than an axial length of a stator core of the second motor.

4. A series of robots comprising:
a first robot; and
a second robot having a payload larger than a payload of the first robot,
wherein the first robot includes a first joint portion, and a second joint portion having an operation ratio smaller than an operation ratio of the first joint portion,
a second gear motor including a second speed reducer and a second motor is incorporated in the first joint portion,
the second robot includes a third joint portion, and a fourth joint portion having an operation ratio smaller than an operation ratio of the third joint portion, and
a third gear motor including the second speed reducer and a first motor having a rated capacity smaller than a rated capacity of the second motor is incorporated in the fourth joint portion.

5. The series of robots according to claim 4,
wherein a fifth gear motor including a third speed reducer having an allowable torque larger than an allowable torque of the second speed reducer and a third motor having a rated capacity larger than a rated capacity of the second motor is incorporated in the third joint portion.

6. The series of robots according to claim 4 or 5,
wherein the operation ratio of the first joint portion is three times or more the operation ratio of the second joint portion, and/or the operation ratio of the third joint portion is three times or more the operation ratio of the fourth joint portion.
